# EUROPEAN PATENT APPLICATION

(11) **EP 3 490 214 A1**
(43) Date of publication of application: **29.05.2019**
(21) Application number: 17306638.2
(22) Date of filing: 24.11.2017
(51) Int. Cl.: H04L 29/06, H04L 12/24, H04L 29/08, G06F 21/45

(54) **METHOD FOR MANAGING LIFECYCLE OF CREDENTIALS**

(71) Applicant: GEMALTO SA, 92190 Meudon (FR)
(72) Inventor: MOSSE, Franck, 13881 GEMENOS Cedex (FR); SAHLI, Chaouki, 13881 GEMENOS Cedex (FR)

(57) **Abstract**

The invention is a method for managing lifecycle of credentials of an application (40) installed on an application server (10). The method comprises the steps of:
- monitoring execution of the application by a credential agent (50) separate from the application and installed on the application server, said credential agent having an access token previously provided by a security server (30),
- upon detection of a predefined event by the credential agent, sending to the security server a polling message comprising the access token,
- checking the access token is genuine by the security server and in case of successful checking sending a security data to the credential agent in response to the polling message (M7), the security data being a secret value and/or an associated metadata,
- updating a security configuration of the application using said security data, then making the security configuration effective.

## Description

### (Field of the invention)

The present invention relates to methods of managing lifecycle of credentials. It relates particularly to methods of automating management of credentials lifecycle of an application installed on a server.

### (Background of the invention)

In Cloud environment where application and micro-services need to discuss between them in a secured way, all the secrets use to establish or secure these communications need to be added into the application manually by the cloud administrator.

For the time being, secrets must be declared and managed inside the cloud environment as resources. The cloud administrator can inject these secrets/resources into applications at the deployment phase by referencing them in a deployment descriptor.

At the application runtime, no modification of these secrets could be performed until the application is redeployed.

For example if a certificate expired, the application fails to communicate and a restart of the application is mandatory with human intervention. The cloud administrator must be aware of the fact that one secret has expired, then update the secret with a new version, identify which applications need to be restarted and after need to restart individually each concerned application. Due to the large number of applications which may be run on a server, this renewal of certificates is a time-consuming and complex task for the cloud administrator.

It is not rare to encounter solutions which have been deployed with certificates having a lifetime fixed to 5 or 10 years in order to avoid this cumbersome tasks. This lead to security breaches.

There is a need for providing a solution allowing to automate the management of credentials lifecycle of applications deployed on a server.

### (Summary of the Invention)

The invention aims at solving the above mentioned technical problem.

The object of the present invention is a method for managing lifecycle of credentials of an application installed on an application server. The method comprises the steps of:
- monitoring execution of the application by a credential agent separate from the application and installed on the application server, the credential agent having an access token previously provided by a security server,
- upon detection of a predefined event by the credential agent, sending from the credential agent to the security server a polling message comprising the access token,
- checking the access token is genuine by the security server and in case of successful checking sending a security data from the security server to the credential agent in response to the polling message, said security data being a secret value and/or an associated metadata, and
- updating by the credential agent a security configuration of the application using said security data, then making the security configuration effective.

Advantageously, the method may comprise the preliminary steps of:
- retrieving from the security server an initial access token and providing the credential agent with the initial access token,
- sending from the credential agent to the security server a populate request comprising the initial access token,
- checking the received initial access token is genuine by the security server and in case of successful checking sending initial secret value and associated metadata from the security server to the credential agent in response to the populate request, and
- initializing by the credential agent the security configuration of the application using said initial secret value and associated metadata.

Advantageously, the credential agent may force a restart of the application for making the security configuration effective.

Advantageously, the secret value may be a certificate, a password or a key.

Advantageously, the polling message may comprise a status data reflecting the predefined event.

Advantageously, the predefined event may be either a predetermined duration or the expiry of the validity of the security data.

Advantageously, the predefined event may be a predetermined number of calls to the application, a predetermined number of failure detected during execution of the application or a predetermined number of requests originated from a single source received by the application.

Another object of the invention is a computer device comprising an application server on which an application is installed. A credential agent separate from the application is installed on the application server. The credential agent is provided with an access token retrieved from a security server. The credential agent is configured to monitor execution of the application and to detect a predefined event. Upon detection of the predefined event, the credential agent is configured to send to the security server a polling message comprising the access token. The credential agent is configured to receive a security data from the security server in response to the polling message, said security data being a secret value and/or an associated metadata. The credential agent is adapted to update a security configuration of the application using said security data, then to make the security configuration effective.

Advantageously, the credential agent may be configured to force a restart of the application for making the security configuration effective.

Advantageously, the predefined event may be a predetermined number of calls to the application.

Advantageously, the predefined event may be a predetermined number of failure detected during execution of the application.

Advantageously, the predefined event may be a predetermined number of requests originated from a single source received by the application.

Advantageously, the credential agent may be configured to stop the application if no response to the polling message is received after a preset duration.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a system comprising an application server and a security server according to an embodiment of the invention,
- Figure 2 is an example of a flowchart for initializing the application and a credential agent according to an embodiment of the invention,
- Figure 3 is an example of a flowchart for monitoring the application thanks to the credential agent according to an embodiment of the invention, and
- Figure 4 is an example showing messages exchanged between the actors according to an embodiment of the invention.

### (Detailed description of the preferred embodiments)

The invention may apply to any type of credentials and applications. For example, the application may be a service or a micro-service running on a cloud server. The credential may be a PKI certificate, a password or a key for instance.

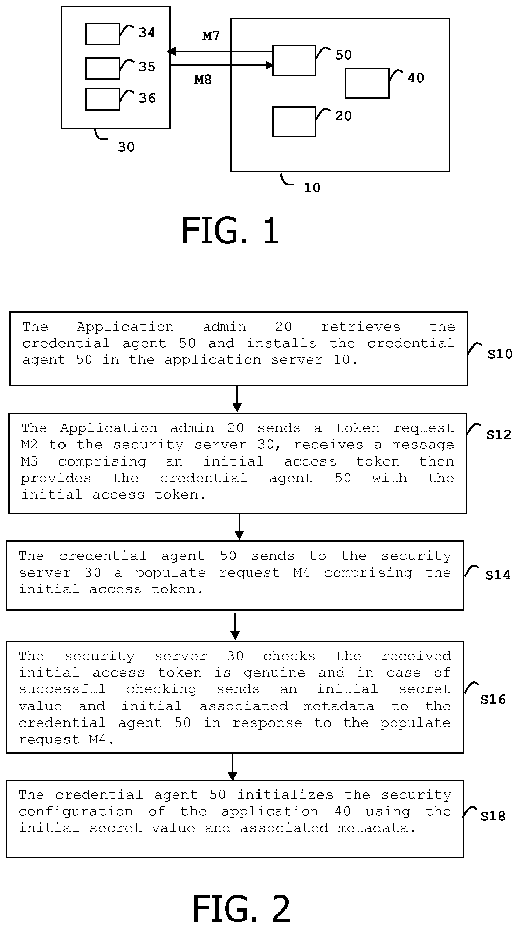

Figure 1 shows an example of architecture of a system comprising an application server and a security server according to an embodiment of the invention.

The application server 10 is a computer machine which comprises an application admin 20 (also called application administrator) and a software application 40. The application admin 20 is a software component designed to manage and administrate software applications on the application server 10.

The security server 30 is a computer machine which is able to provide the credential agent 50 to the application admin 20. The security server 30 stores credential 35 and metadata 36 which are intended to initialize the configuration of the credential agent 50. The security server 30 also stores an initial access token 34.

In the example of Figure 1, the credential agent 50 has been installed into the application server 10.

The credential agent 50 is designed to monitor the software application 40. For instance, the credential agent 50 may be configured to drive application operation, to set configuration of the application (like security parameters), to analyze data produced by the application or to spy communication between the application and another entity (like a remote server).

It is to be noted that the credential agent 50 is a software component distinct from the application 40 as such.

Figure 2 shows an example of a flowchart for initializing the application and a credential agent according to an embodiment of the invention.

At step S10, the Application admin 20 retrieves the credential agent 50 from the security server 30 and installs the credential agent 50 in the application server 10. The credential agent 50 starts.

Then at step S12, the Application admin 20 retrieves an initial access token 34 from the security server 30 and provides the credential agent 50 with the initial access token 34. For example the Application admin 20 can send a token request M2 to the security server 30 which returns a message M3 comprising the initial access token 34.

Then at step S14, the credential agent 50 sends to the security server a populate request M4 comprising the initial access token 34. The populate request M4 aims at requesting first credentials 35 and their associated metadata 36.

At step S16, the security server 30 checks that the initial access token contained in the received populate request M4 is genuine and in case of successful checking returns an initial secret value (first credentials 35) and initial associated metadata 36 to the credential agent 50 in response to the populate request M4. In one embodiment, the initial access token can be a one-time value which is considered as genuine the first time it is received only. In another embodiment, the initial access token can be a data which is enciphered and the checking of genuineness may be performed by deciphering the initial access token to retrieve the data.

If the checking of the initial access token failed, the security server 30 rejects the incoming request (i.e. the populate request M4) and can log the attempt and send an alarm or a trap.

At step S18, the credential agent 50 initializes the security configuration of the application 40 using the received initial secret value and its initial associated metadata.

The initial secret value may be a certificate, a password or a key for example. The initial metadata associated to the initial secret value may be any combination of the following items: a validity duration, access control lists (ACL), a script run by the credential agent 50, a security policy and security rules.

The security policy can indicates which action to perform on specific events. For example:
- Stop after n number of failed requests, or
- Stop if the number of requests to micro service is too high.
For security rules, it could be: Accept only n number of connections coming from addresses having a specific IP or IP-range.

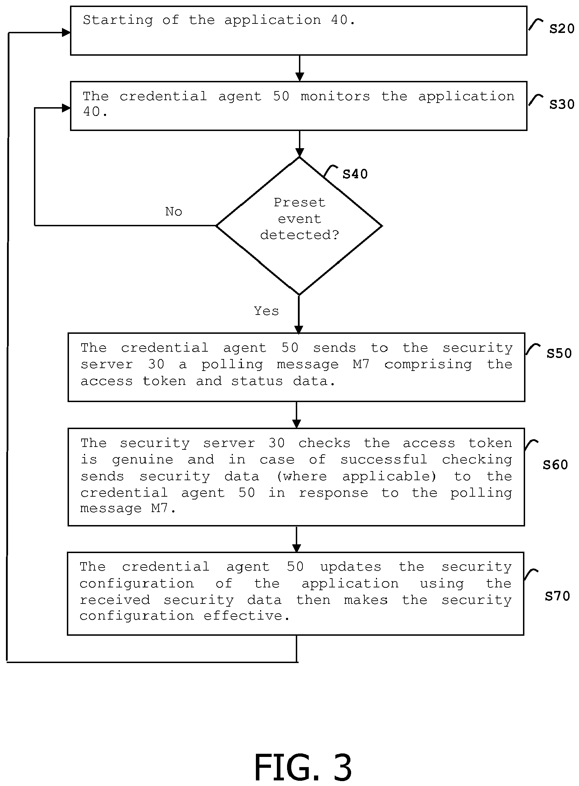

Figure 3 shows an example of a flowchart for monitoring an application thanks to the credential agent according to an embodiment of the invention.

Assuming that the both the application 40 and the credential agent 50 have been initialized as described at Figure 2, the software application 40 starts at step S20. For example the application 40 may be launched upon a request of a user.

The credential agent 50 automatically monitors the execution of the application 40. Although noted as steps S30 and S40, the monitoring operation is continuously performed while the application 40 is running.

The monitoring operation preferably includes a regular check of a list of events. It may be implemented through a scan of error log, or spying communications between the application 40 and an external entity for example. Preferably, the list of checked events include the tracking of the clock/time so as to send polling messages on a regular time base.

The credential agent 50 may be designed to monitor the number of calls to the application 40 and to detect an event if a predetermined number of calls has been reached.

The credential agent 50 may be designed to monitor the origin of the requests addressed to the application 40 and to detect an event if a predefined number of requests originated from a single source (origin) reaches a preset threshold.

The credential agent 50 may be designed to monitor the number of failures of the application 40 and to detect an event if the number of failures of the application 40 reaches a predefined number.

If a preset event is detected by the credential agent 50, the credential agent 50 sends to the security server 30 a polling message M7 which comprises an access token at step S50. In one variant, this access token is the initial access token 34 of Figure 2. In another variant, the access token comprised in the polling message M7 is a second access token previously provided to the credential agent 50 with the message M5 for example.

At step S60, the security server 30 checks the genuineness of the access token contained in the received polling message M7. In case of successful checking, the security server 30 sends a message M8 comprising security data (where applicable) to the credential agent 50 in response to the polling message M7. The security data may be any combination of new credentials and new metadata. If there is no available security data that correspond to the received access token, the security server 30 returns a message M8 devoid of new credentials and new metadata.

In case of unsuccessful checking (of the genuineness of the access token), the security server 30 can take any appropriate action like rejects the incoming request (i.e. the polling message M7) and can log the error (and attempt). It can send an alarm or a trap. It can also lock the secret in the case of too high number of attempts (lock could be definitive or for a period of time) or blacklist the IP or IP-range based on the source address.

Advantageously, the polling message M7 may comprise a status data reflecting the detected event which triggered the sending of the polling message M7. Thus the security server 30 can generate the message M8 by taking the nature of the detected event into account. For instance, if the event is the expiry of certificate validity, the security server 30 can build a message M8 comprising a new certificate. In another example, the detected event may be the fact that the current certificate of the application 40 will expire soon (in less than a predefined number of minutes).

At step S70, the credential agent 50 updates the security configuration of the application 40 using the received security data, then it makes this new security configuration effective. For instance, the credential agent 50 can trigger the restart of the software application 40 so that new security configuration is taking into account, (i.e. loop to the step S20). In other words the credential agent 50 can force the restart of the software application 40. In another example, the credential agent 50 can move some security parameters to a new location (ex: change of the memory address) or update a pointer so that new security configuration is taking into account.

Alternatively, the credential agent 50 can trigger the loading of the new security configuration in the working memory allocated to the software application 40.

Advantageously, the credential agent 50 can stop the execution of the software application 40 if no response to the polling message M7 has been received after a predetermined duration.

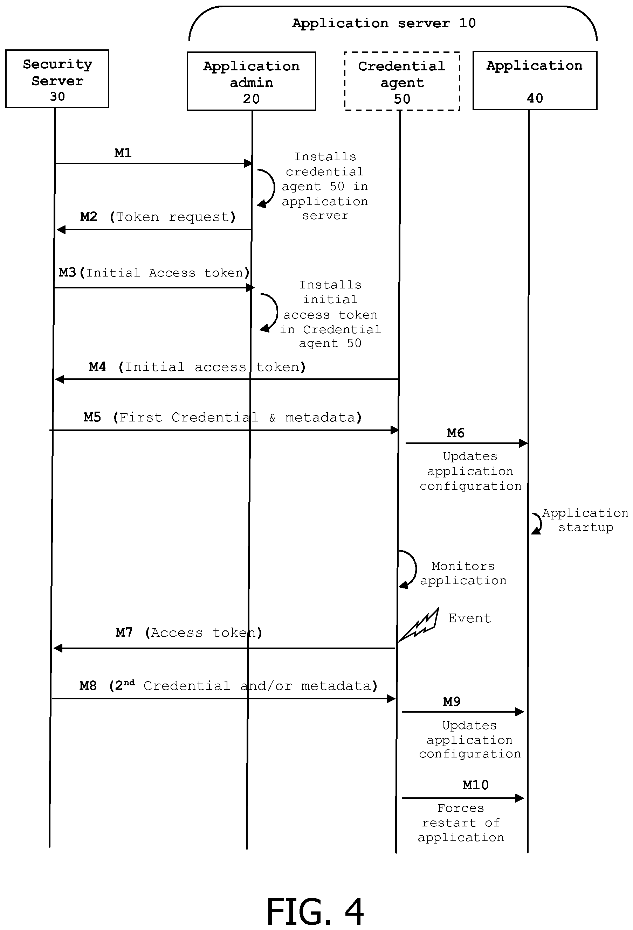

Figure 4 shows an example of messages exchanged between the actors according to an embodiment of the invention.

In this example the security server 30 and the application server 10 are similar to those of Figure 1.

First the security server 30 sends a message M1 to the application admin 20 for requesting installation of the credential agent 50 in the application server 10.

Preferably, the credential agent 50 is uniquely allocated to the software application 40. Thus the credential agent 50 can be managed as a sidecar service of the application 40. Alternatively, the credential agent 50 may be configured to monitor several software applications installed on the application server 10.

Upon receipt of the message M1, the application admin 20 installs the credential agent 50 on the application server 10.

Then the application admin 20 sends a message M2 to the security server 30 for requesting an access token. In response, the security server 30 returns an initial access token 34 through a message M3. The application admin 20 provides the credential agent 50 with the received initial access token. This initial access token is intended to allow the security server 30 to identify the credential agent 50 and the software application 40 when receiving a further message. In other word, the initial access token is a way to get access to a specific security data.

Then the credential agent 50 sends a message M4 to the security server 30 to request a first set of credentials/metadata. The credential agent 50 includes the initial access token 34 into the message M4.

Then the security server 30 extracts the initial access token from the message M4 and authenticates it. In case of successful authentication, the security server 30 retrieves first security data (i.e. first credentials 35 and associated metadata 36) and sends them to the credential agent 50 through a message M5. The security server 30 may be configured to generate the first security data on the fly or to read them from a secure storage area.

Upon receipt of the message M5, the credential agent 50 updates the security configuration of the application 40 with the received security data then it triggers the application 40 start.

From that moment, the credential agent 50 continuously monitors the execution of the application 40.

As soon as the credential agent 50 detects a predefined event, it sends a polling message M7 to the security server 30. Preferably, the message M7 comprises a status data reflecting the type of detected event.

Then the security server 30 returns a message M8 containing possible updated security data (i.e. new credentials and/or new metadata). Then the credential agent 50 updates the configuration of the application 40 by using the received new security data and may force a restart of the application.

From that moment, the credential agent 50 continues to monitor the operation of the software application 40. It can detect a further event and send a further polling message (similar to message M7).

Advantageously, the credential agent 50 may increase the frequency of sending polling messages as a special date approaches. For instance the duration between two polling messages may be reduced when the validity date of credential is soon expired.

Preferably all exchanged messages are sent in a secure manner through secure communication sessions. For example, TLS mutual authentication or other secure protocol can be implemented.

In the above presented example, the credential agent 50 initializes or updates the security configuration of the application 40 by using either initial secret value and associated metadata or new security data. It must be understood that the credential agent 50 can both update a first set of security parameters belonging to the application and a second set of security parameters belonging to credential agent 50.

Thanks to the polling mechanism, the credential agent 50 can receive a polling response (ex: message M8) which results in deactivation of the credentials currently set for a software application. Hence the security server can revoke credentials allocated to the application 40.

The invention allows to automate the detection of expired credentials and their replacement (i.e. without human intervention once the credential agent is installed).

Thanks to the invention, all secret and sensitive data (credentials and associated metadata) are populated in a security server which can be distinct from the application server. An advantage of the invention is to provide a solution which automatically manages the lifecycle of credentials for a software application installed on an application server. Thus the application server is no longer responsible for managing updates to the application security configuration. In other words, thanks to the invention two roles are dissociated: on the one hand the application server (which can be managed by a cloud administrator) is in charge of installing and running the application while on the other hand, the security server (which can be managed by a security officer) is in charge of providing all security data (i.e. credentials and metadata).

Thus the invention allows to centralize the management and the life cycle of the secret outside the perimeter of the cloud infrastructure and cloud administrator. Thanks to the invention, there is no more need to deal with a cloud administrator to restart and manipulate secrets for one or several applications installed on an application server.

## Claims

1. A method for managing lifecycle of credentials of an application (40) installed on an application server (10), **characterized in that** the method comprises the steps of:
- monitoring (S30) execution of the application by a credential agent (50) separate from the application and installed on the application server, said credential agent having an access token previously provided by a security server (30),
- upon detection (S40) of a predefined event by the credential agent, sending (S50) from the credential agent to the security server a polling message (M7) comprising the access token,
- checking the access token is genuine by the security server and in case of successful checking sending (S60) a security data from the security server to the credential agent in response to the polling message, said security data being a secret value and/or an associated metadata,
- updating (S70) by the credential agent a security configuration of the application using said security data, then making the security configuration effective.

2. The method according to claim 1, wherein the method comprises the preliminary steps of:
- retrieving (S12) from the security server an initial access token and providing the credential agent with the initial access token,
- sending (S14) from the credential agent to the security server a populate request (M4) comprising the initial access token,
- checking the received initial access token is genuine by the security server and in case of successful checking sending (S16) initial secret value and associated metadata from the security server to the credential agent in response to the populate request (M4),
- initializing (S18) by the credential agent the security configuration of the application using said initial secret value and associated metadata.

3. The method according to claim 1, wherein the credential agent forces a restart of the application for making the security configuration effective.

4. The method according to claim 1, wherein the secret value is a certificate, a password or a key.

5. The method according to claim 1, wherein the polling message comprises a status data reflecting said predefined event.

6. The method according to claim 1 or 5, wherein the predefined event is either a predetermined duration or the expiry of the validity of said security data.

7. The method according to claim 1 or 5, wherein the predefined event is a predetermined number of calls to the application, a predetermined number of failure detected during execution of the application or a predetermined number of requests originated from a single source received by the application.

8. A computer device comprising an application server (10) on which an application (40) is installed,
**characterized in that** a credential agent (50) separate from the application is installed on the application server,
**in that** the credential agent is provided with an access token retrieved from a security server (30),
**in that** the credential agent is configured to monitor execution of the application and to detect a predefined event,
**in that** upon detection of said predefined event, the credential agent is configured to send to the security server a polling message (M7) comprising the access token,
**in that** the credential agent is configured to receive a security data from the security server in response to the polling message, said security data being a secret value and/or an associated metadata,
and **in that** the credential agent is adapted to update a security configuration of the application using said security data, then to make the security configuration effective.

9. The computer device according to claim 8, wherein the credential agent is configured to force a restart of the application for making the security configuration effective.

10. The computer device according to claim 8, wherein the secret value is a certificate, a password or a key.

11. The computer device according to claim 8, wherein the predefined event is either a predetermined duration or the expiry of the validity of said security data.

12. The computer device according to claim 8, wherein the predefined event is a predetermined number of calls to the application.

13. The computer device according to claim 8, wherein the predefined event is a predetermined number of failure detected during execution of the application.

14. The computer device according to claim 8, wherein the predefined event is a predetermined number of requests originated from a single source received by the application.

15. The computer device according to claim 8, wherein the credential agent is configured to stop the application if no response to the polling message is received after a preset duration.
